# EUROPÄISCHE PATENTSCHRIFT

(11) **EP 3 487 285 B1**
(45) Veröffentlichungstag und Bekanntmachung des Hinweises auf die Patenterteilung: **04.08.2021**
(21) Anmeldenummer: 17733338.2
(22) Anmeldetag: 13.06.2017
(51) Int. Cl.: A01G 25/06, A01G 25/02

(54) **BODENMATTEN ZUR WASSERVERTEILUNG**
GROUND MATS FOR WATER DISTRIBUTION
NATTE D'IRRIGATION POUR LA DISTRIBUTION D'EAU

(30) Priorität: 21.07.2016 AT 506682016
(43) Veröffentlichungstag der Anmeldung: 29.05.2019
(73) Patentinhaber: Eichenauer, Thomas, 1070 Wien (AT)
(72) Erfinder: EICHENAUER, Thomas, 1070 Wien (AT); SULZBACHER, Dorothea, 1070 Wien (AT)
(74) Vertreter: Hübscher & Partner Patentanwälte GmbH
(86) Internationale Anmeldenummer: PCT/AT2017/050013
(87) Internationale Veröffentlichungsnummer: WO 2018/014055

(56) Entgegenhaltungen:
- WO-A1-91/03155
- WO-A1-02/082888
- WO-A1-2015/176100
- DE-A1-102011 083 742
- JP-A- 2000 265 345
- JP-A- 2005 237 261
- JP-U- S 571 547

## Beschreibung

### Technisches Gebiet

Die Erfindung bezieht sich auf eine Vorrichtung zur Wasserleitung in einer Bodenfläche mit einer in das Erdreich eingebrachten Vlieslage, die wenigstens einen mit Durchtrittsöffnungen versehenen Leitungsstrang zur Wasserführung aufweist.

### Stand der Technik

Um eine Bodenfläche bewässern zu können, ohne Wasser von oben aufbringen zu müssen, ist es bekannt (WO 2016/046264 A1), im Erdreich eine im Wesentlichen parallel zur Bodenoberfläche verlaufende Bewässerungsmatte vorzusehen, die aus zwei miteinander vernadelten Vlieslagen aufgebaut ist, zwischen denen Bewässerungsrohre mit Durchtrittsöffnungen für den Wasseraustritt angeordnet sind, sodass sich das aus den Bewässerungsrohren austretende Wasser durch Kapillarwirkung über die Fläche solcher Bewässerungsmatten verteilt. Diese Bewässerungsmatten stellen eine Sperre insbesondere für Würmer dar und behindern außerdem das Tiefenwachstum von Pflanzenwurzeln. In diesem Zusammenhang ist zusätzlich zu beachten, dass sich das Wasser schwerkraftbedingt auf der Unterseite der Bewässerungsmatte sammelt und daher für von oben in die Tiefe wachsende Pflanzen nur bedingt zur Verfügung steht. Da solche Bewässerungsmatten bevorzugt in der üblichen Wurzeltiefe ausgewachsener Pflanzen verlegt werden, können junge Pflanzen, deren Wurzeln in der Anwachsphase noch nicht ausreichend tief in das Erdreich reichen, trotz der Bewässerungsmatte unter Umständen zu wenig Wasser erhalten.

Zur Verbesserung der Wasserverteilung in einer Bodenschicht ist es außerdem bekannt (WO 2010/022421 A1), in die Bodenschicht Vliesstreifen einzubringen, die aufgrund ihrer Kapillarwirkung Wasser aufnehmen und verteilen können. Zur einfacheren Einbringung in eine Bodenschicht können diese Vliesstreifen Gitter bilden, die aufgrund der gewählten Weite der Gitteröffnungen ohne Weiteres durchwachsen werden können. Solche Vliesgitter werden jedoch nicht zur Bewässerung von Bodenflächen, sondern zur Verteilung des vom Erdreich bereits aufgenommenen Wassers über eine entsprechende Bodenfläche eingesetzt, weil die Vliesstreifen aus den Bodenbereichen hoher Feuchtigkeit Wasser aufnehmen und aufgrund der Kapillarwirkung zu Bereichen mit geringerer Erdfeuchtigkeit leiten können.

Eine weiter Bewässerungslösung ist aus der WO02/082888 A1 bekannt.

### Darstellung der Erfindung

Der Erfindung liegt somit die Aufgabe zugrunde, eine Vorrichtung anzugeben, mit deren Hilfe insbesondere eine zur Bepflanzung vorgesehene Bodenfläche so bewässert werden kann, dass die Pflanzen ausreichend mit Wasser versorgt werden können, ohne das Pflanzenwachstum zu behindern. Außerdem sollen Voraussetzungen geschaffen werden, mithilfe einer solchen Vorrichtung auch Überschusswässer aus einem Bodenbereich abzuleiten.

Ausgehend von einer Vorrichtung der eingangs geschilderten Art löst die Erfindung die gestellte Aufgabe dadurch, dass die Vlieslage ein Gitter aus einander kreuzenden Scharen von Gittersträngen bildet und eine entlang des Leitungsstrangs verlaufende Vliesbahn umfasst und dass wenigstens eine aus Vliesstreifen gebildete Schar der Gitterstränge an die Vliesbahn anschließt.

Durch das Vorsehen einer Vliesbahn entlang des Leitungsstrangs kann für den Bewässerungsfall das aus dem Leitungsstrang durch die Durchtrittsöffnungen austretende Wasser von der Vliesbahn aufgenommen werden, die somit als Verteiler für das aufgenommene Wasser an die an die Vliesbahn angeschlossenen Vliesstreifen des Gitters dient, sodass entsprechende Wassermengen in einfacher Art in das Gitter eingespeist werden können. Durch die Kapillarwirkung wird das von der Vliesbahn an das Gitter weitergeleitete Wasser über die Gitterfläche verteilt und in Abhängigkeit von der jeweiligen Erdfeuchte an das Erdreich abgegeben.

Das Gitter aus wenigstens einer Schar von Vliesstreifen bietet gegenüber einer Bewässerungsmatte nach dem Stand der Technik zunächst den Vorteil der Durchwachsbarkeit und erlaubt daher ein von der Wurzeltiefe ausgewachsener Pflanzen unabhängiges Verlegen in einer Bodentiefe, die der Wurzeltiefe in der Anwachsphase entspricht. Die Pflanzen können folglich sowohl in der Anwachsphase als auch später mit Wasser und gegebenenfalls mit im Wasser gelösten Nährstoffen ausreichend versorgt werden. Dazu kommt, dass bei einem vergleichbaren Vliesvolumen die Vliesstreifen eines Gitters gegenüber den Vlieslagen einer Bewässerungsmatte erheblich dicker ausfallen und daher auch bei einer Verstopfung oberflächennaher Poren mit Feinteilen des Erdreichs ein größeres Volumen zur Wasseraufnahme und -weiterleitung als bekannte Bewässerungsmatten zur Verfügung stellen. Dazu kommt, dass das Gitter der Vlieslage den Zusammenhalt des Erdreichs unterstützt und die Verankerung der Wurzeln im Erdreich verbessert.

Für den Fall einer Entwässerung wirkt die Vliesbahn als Sammler für das über die Vliesstreifen des Gitters zur Vliesbahn geleitete Überschusswasser, das dann von der Vliesbahn durch die Durchtrittsöffnungen des Leitungsstrangs in diesem aus dem Gitterbereich abfließen kann. Zur Unterstützung der Drainagewirkung kann die an den Leitungsstrang angeschlossene Vliesbahn in einem durch die Gitterverlegung bestimmten Bereich größerer Verlegungstiefe, also in einem Wellental des Gitters, verlaufen, wie zur besseren Einspeisung von Wasser in das Gitter die Vliesbahn im Bereich eines Wellenbergs des Gitters vorgesehen sein kann, um für die Wasserleitung zusätzlich die Schwerkraft nützen zu können.

Damit Wasser aus dem Leitungsstrang gut in die Vliesbahn oder aus der Vliesbahn gut in den Leitungsstrang überführt werden kann, kann die Vliesbahn den Leitungsstrang umhüllen. Dies ist jedoch nicht zwingend. Zum gleichen Zweck kann der Leitungsstrang auch zwischen der Vliesbahn und einer mit der Vliesbahn verbundenen Deckbahn angeordnet werden, die nicht zwingend als Vlies ausgebildet sein muss.

Das Gitter selbst kann aus kreuzweise verlegten Scharen von Gittersträngen gebildet werden, von denen zumindest eine Schar aus Vliesstreifen besteht, die für die kapillare Wasserleitung sorgen. Um vorteilhafte Voraussetzungen in Bezug auf die Gitterherstellung zu schaffen, kann die Vlieslage ein wenigstens einschichtiges Vlies aufweisen, das mit parallelen Reihen von mit gegenseitigem Abstand hintereinander angeordneten, reihenweise gegeneinander versetzten Trennschnitten versehen und quer zu den Trennschnittreihen zum Gitter auseinandergezogen wird. Dieses Gitter kann mit einer entlang des Leitungsstrangs verlaufenden, durchgehenden Vliesbahn verbunden werden, um einen vorteilhaften Wasserübertritt zwischen der Vliesbahn und den Vliesstreifen des Gitters sicherstellen zu können. Einfachere Konstruktionsverhältnisse ergeben sich allerdings, wenn das Vlies selbst die durchgehende Vliesbahn bildet und beidseits dieser Vliesbahn mithilfe der zur Vliesbahn parallelen Trennschnittreihen zum Gitter auseinandergezogen wird.

Das Vlies zur Gitterherstellung kann aus einer Vliesschicht und wenigstens einer weiteren mit der Vliesschicht verbundenen Schicht aufgebaut sein, um besonderen Anforderungen zu genügen, wobei die zweite Schicht eine Vliesschicht, aber auch eine Folie oder eine Gewebe und dgl. sein kann. Bilden diese beiden Schichten des Vlieses je eine Bahnschicht, so kann der Leitungsstrang vorteilhaft zwischen diesen Bahnschichten verlaufen. Der Gitteraufbau aus wenigstens zwei Schichten erlaubt außerdem die Aufnahme von Zusatzstoffen und/oder Verstärkungseinlagen zwischen den miteinander verbundenen Schichten.

### Kurze Beschreibung der Erfindung

In der Zeichnung ist der Erfindungsgegenstand beispielsweise dargestellt. Es zeigen
- Fig. 1: eine erfindungsgemäße Vorrichtung zur Bewässerung einer Bodenfläche ausschnittsweise im Bereich eines Leitungsstrangs zur Wasserführung in einer Draufsicht,
- Fig. 2: diese Vorrichtung in einem Schnitt nach der Linie II-II der Fig. 1,
- Fig. 3: eine Ausführungsvariante einer erfindungsgemäßen Vorrichtung in einer Draufsicht,
- Fig. 4: einen Schnitt nach der Linie IV-IV der Fig. 3,
- Fig. 5: eine der Fig. 3 entsprechende Darstellung einer weiteren Ausführungsform der Vorrichtung,
- Fig. 6: einen Schnitt nach der Linie VI-VI der Fig. 5,
- Fig. 7: eine erfindungsgemäße Vorrichtung mit einem Gitter aus einem zweischichtigen Vlies in einer Draufsicht,
- Fig. 8: die Vorrichtung nach der Fig. 7 in einem Schnitt nach der Linie VIII-VIII der Fig. 7,
- Fig. 9: eine zusätzliche Ausführungsform einer erfindungsgemäßen Vorrichtung in einer Draufsicht,
- Fig. 10: einen Schnitt nach der Linie X-X der Fig. 9,
- Fig. 11: eine erfindungsgemäße Vorrichtung zur Entwässerung in einer Vorderansicht und
- Fig. 12: die Vorrichtung entsprechend der Fig. 11 in einem Schnitt nach der Linie XII-XII der Fig. 11.

### Weg zur Ausführung der Erfindung

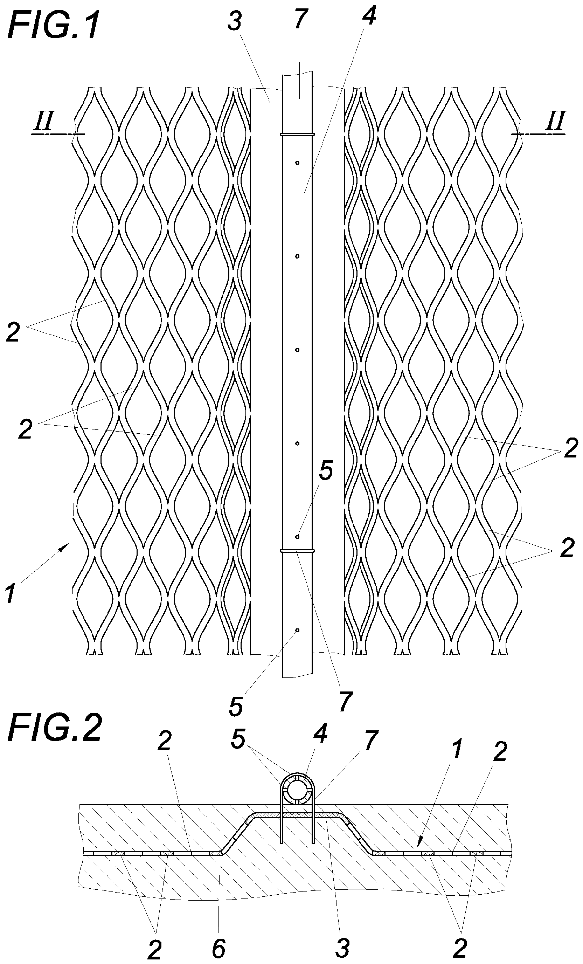

Die Vorrichtung zum Bewässern einer Bodenfläche gemäß den Fig. 1 und 2 umfasst eine Vlieslage in Form eines Gitters 1 aus zwei einander kreuzenden Scharen von Vliesstreifen 2 und einer durchgehenden Vliesbahn 3 entlang eines Leitungsstrangs 4, der mit Wasser gespeist wird, das durch Durchtrittsöffnungen 5 aus dem Leitungsstrang 4 auf die Vliesbahn 3 austritt. Wie insbesondere der Fig. 2 entnommen werden kann, ist das Gitter 1 im Wesentlichen parallel zur Oberfläche in das zu bewässernde Erdreich 6 eingebettet und bildet lediglich im Bereich des auf der Oberfläche des Erdreichs 6 mithilfe von Befestigungsbügeln 7 verlegten Leitungsstrangs 4 eine Welle, deren der Oberfläche naher Wellenberg durch die Vliesbahn 3 geformt wird. Das vom Leitungsstrang 4 auf die Vliesbahn 3 durchsickernde Wasser wird von der Vliesbahn 3 aufgenommen und aufgrund der Kapillarwirkung mit Unterstützung durch die Schwerkraft an die Vliesstreifen 2 des Gitters 1 weitergeleitet, um durch diese Vliesstreifen 2 über die zu bewässernde Bodenfläche verteilt zu werden.

Das Gitter 1 ist aus einem Vlies hergestellt, das mit zum Leitungsstrang 4 parallelen Reihen von mit gegenseitigem Abstand hintereinander angeordneten, reihenweise gegeneinander versetzten Trennschnitten versehen und quer zu den Trennschnittreihen zum Gitter 1 auseinandergezogen ist. Der Reihenabstand entspricht dabei der Breite der Vliesstreifen 2. Die Länge der Gitteröffnungen in Richtung des Leitungsstrangs 4 wird durch die Länge der Trennschnitte und quer dazu durch die Streckung des Gitters 1 bestimmt. Gemäß den Fig. 1 und 2 ist die Vliesbahn 3 Teil des Gittervlieses, das beidseits der Vliesbahn 3 bahnparallele Trennschnittreihen aufweist und quer zu diesen Trennschnittreihen zum Gitter 1 gestreckt ist.

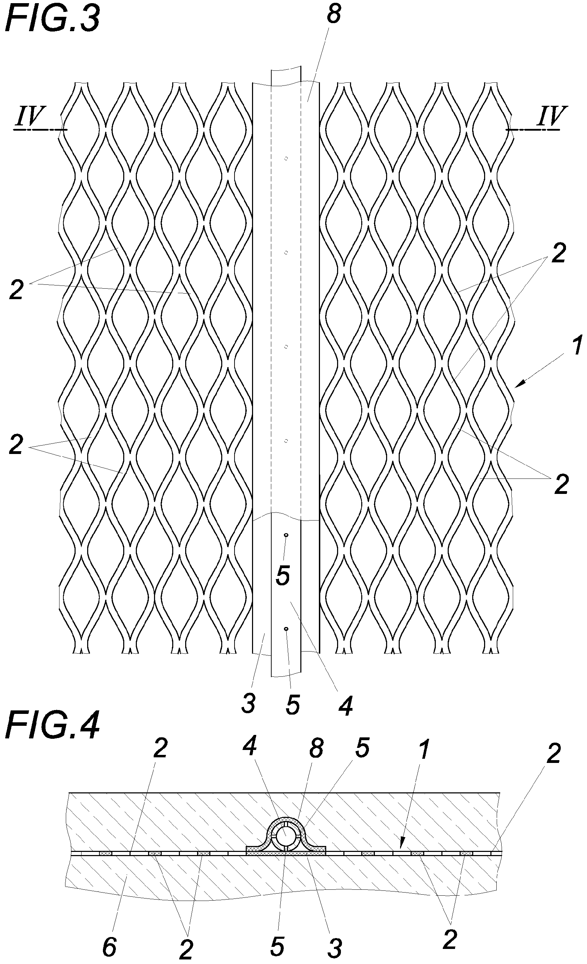

Wie die Ausführungsform nach den Fig. 3 und 4 veranschaulicht, kann der Leitungsstrang 4 in die Vlieslage eingebunden werden, indem der Leitungsstrang 4 zwischen der Vliesbahn 3 und einer mit der Vliesbahn 3 verbundenen, vorzugsweise aus einem Vlies bestehenden Deckbahn 8 verläuft. Das aus dem Leitungsstrang 4 durch die Durchtrittsöffnungen 5 austretende Wasser gelangt somit teilweise unmittelbar und teilweise über die Deckbahn 8 auf die Vliesbahn 3, um von der Vliesbahn 3 wieder in das Gitter 1 weitergeleitet zu werden, das in diesem Fall im Wesentlichen oberflächenparallel verlegt werden kann. Die Führung des Leitungsstrangs 4 zwischen der Vliesbahn 3 und der Deckbahn 8 schützt außerdem den Leitungsstrang 4 vor einem Verstopfen der Durchtrittslöcher 5 durch feinkörniges Erdmaterial oder durch einwachsende Wurzeln. Anstelle des Einsatzes einer Deckbahn 8 könnte aber auch die Vliesbahn 3 den Leitungsstrang 4 in einer Schlaufe vollständig umhüllen.

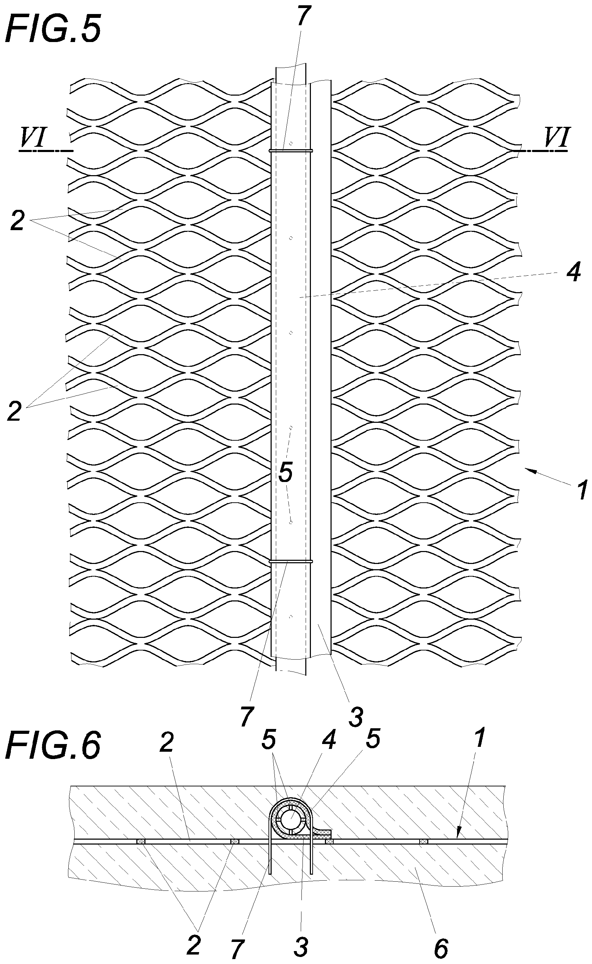

Gemäß dem Ausführungsbeispiel nach den Fig. 5 und 6 ist eine vom Gitter 1 gesonderte Vliesbahn 3 vorgesehen, die den Leitungsstrang 4 schützend umschließt und mit dem durchgehenden Gitter 1 verbunden ist, sodass wiederum das aus dem Leitungsstrang 4 austretende Wasser durch die Vliesbahn 3 auf das Gitter 1 übertragen wird. Die zur Fertigung des Gitters 1 aus einem Vlies vorgesehenen Trennschnittreihen des Vlieses können in diesem Fall auch quer zum Leitungsstrang 4 verlaufen, wie dies der Fig. 5 entnommen werden kann, weil das Strecken des Gitters 1 quer zu den Trennschnittreihen in diesem Fall durch die nachträglich aufgebrachte Vliesbahn 3 nicht behindert wird. Der Verlauf der Trennschnittreihen hat einen wesentlichen Einfluss auf die Richtung der Wasserverteilung, die ja in Richtung der Scharen der Vliesstreifen 2 erfolgt und daher nach den Fig. 5 und 6 bevorzugt quer zum Leitungsstrang 4, nach den Fig. 1 bis 4 jedoch parallel zum Leitungsstrang 4 ausgerichtet ist.

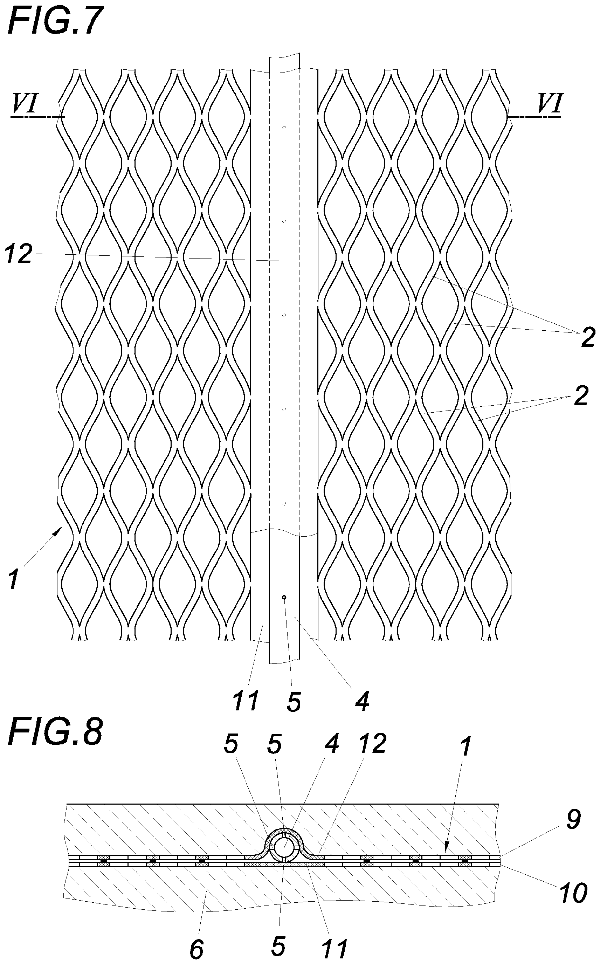

Die Vorrichtung nach den Fig. 7 und 8 unterscheidet sich von der nach den Fig. 3 und 4 im Wesentlichen dadurch, dass das mit parallelen Trennschnittreihen versehene und zum Gitter 1 gestreckte Vlies aus zwei miteinander vernadelten Schichten 9, 10 aufgebaut ist, die jeweils eine Bahnschicht 11, 12 bilden. Zwischen den beiden Bahnschichten 11 und 12 kann der Leitungsstrang 4 aufgenommen werden, wie dies Fig. 8 zeigt. Der zweischichtige Vliesaufbau ermöglicht die Einlagerung von Zusatzstoffen, wie Nährstoffen, Mitteln zur Bodenverbesserung und Düngung, Mikroorganismen, Spurenelementen, Samen, Holzasche, Mykorrhizen, Feuchtemessern, Superabsorbern und dgl., sowie von Verstärkungseinlagen, wie Fasern, Fäden, Drähten, usw. Obwohl im Ausführungsbeispiel die beiden Schichten 9, 10 aus einem Vlies bestehen, braucht nur eine dieser Schichten 9, 10 als Vlies ausgebildet zu sein. Eine der Schichten 9, 10 kann beispielsweise aus einer Folie bestehen, um einen Wasseraustritt auf der Seite der Folie zu verhindern.

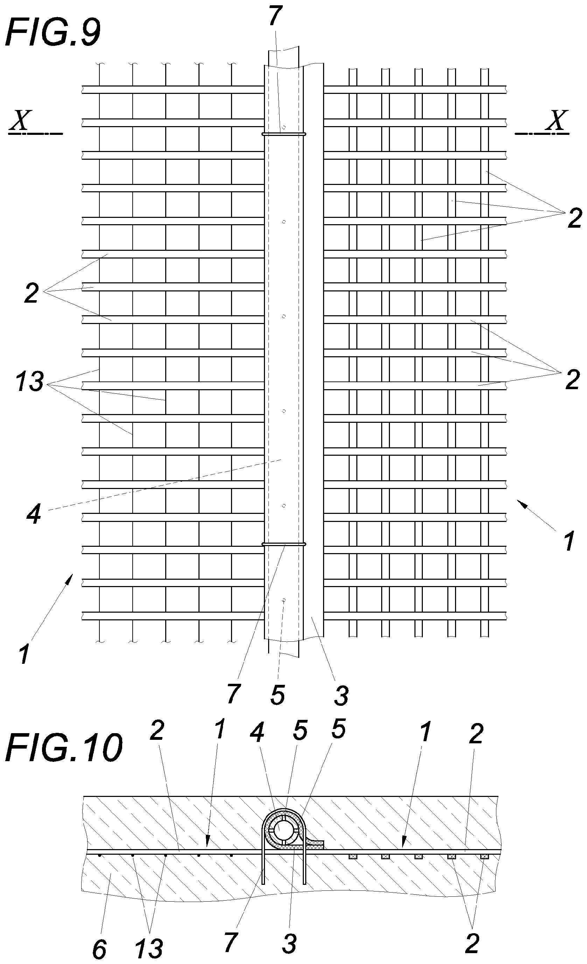

Aus dem Ausführungsbeispiel nach den Fig. 9 und 10 wird ersichtlich, dass das Gitter 1 der erfindungsgemäßen Vorrichtung unterschiedlich aufgebaut sein kann. Dieses Gitter 1 kann beispielsweise aus zwei Scharen einander unter einem rechten Winkel kreuzender Vliesstreifen 2 aufgebaut sein, die parallel und senkrecht zum Leitungsstrang 4 verlaufen und an den Knotenpunkten miteinander verbunden sind, wie dies das Gitter 1 auf der rechten Seite des Leitungsstrangs 4 zeigt. Es ist gemäß der linken Seite aber auch möglich, nur eine Schar der Gitterstränge als Vliesstreifen 2 auszubilden. Die anderen Gitterstränge 13 können aus einem jeweils den gestellten Anforderungen entsprechendem Material bestehen, z. B. aus Gewebestreifen, Zugfäden, Drähten usw. Die Vliesbahn 3, die in einem solchen Fall üblicherweise nicht Teil des Gitter 1 ist, kann entsprechend der Ausführungsform nach den Fig. 4 und 5 den Leitungsstrang 4 umschließen.

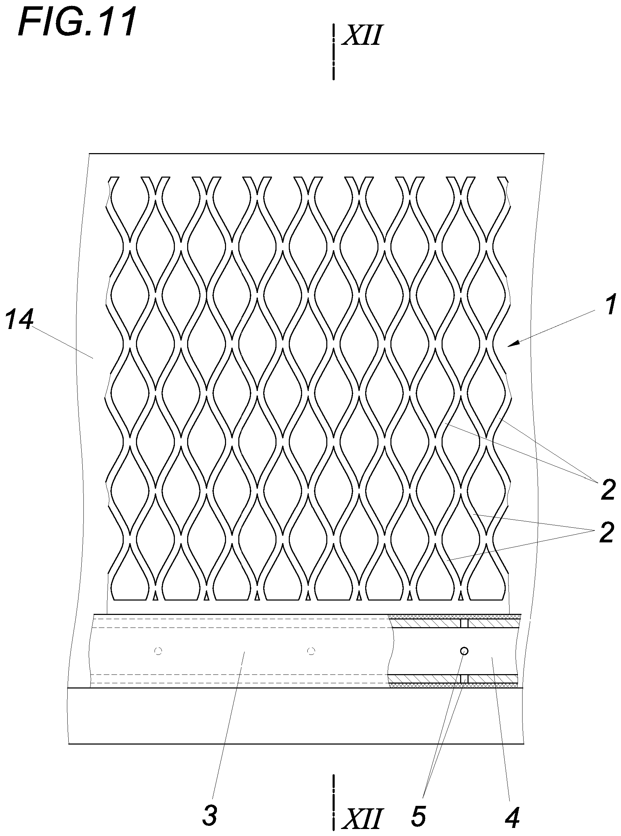

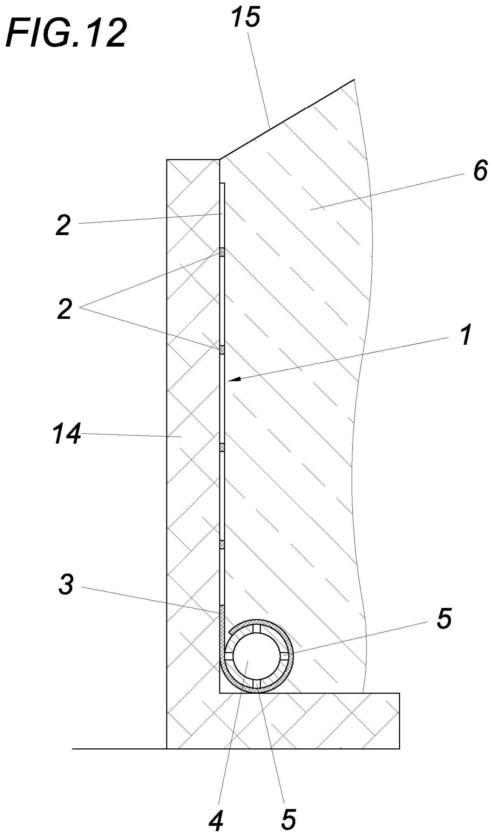

In den Fig. 11 und 12 ist schließlich der Einsatz einer erfindungsgemäßen Vorrichtung zur Entwässerung dargestellt. Das Gitter 1 aus den Vliesstreifen 2 ist gemäß dem Ausführungsbeispiel entlang einer Stützmauer 14 für eine Böschung 15 verlegt und nach unten durch die Vliesbahn 3 abgeschlossen, die den Leitungsstrang 4 mit den Durchtrittsöffnungen 5 umschließt, sodass das vom Gitter 1 aufgenommene und sich in der Vliesbahn 3 sammelnde, abzuleitende Überschusswasser durch den Leitungsstrang 4 abfließen kann.

## Patentansprüche

1. Vorrichtung zur Wasserleitung in einer Bodenfläche mit einer in das Erdreich (6) eingebrachten Vlieslage, die wenigstens einen mit Durchtrittsöffnungen (5) versehenen Leitungsstrang (4) zur Wasserführung aufweist, **dadurch gekennzeichnet, dass** die Vlieslage ein Gitter (1) aus einander kreuzenden Scharen von Gittersträngen bildet und eine entlang des Leitungsstrangs (4) verlaufende Vliesbahn (3) umfasst und dass wenigstens eine aus Vliesstreifen (2) gebildete Schar der Gitterstränge an die Vliesbahn (3) anschließt.

2. Vorrichtung nach Anspruch 1, **dadurch gekennzeichnet, dass** die Vliesbahn (3) den Leitungsstrang (4) umhüllt.

3. Vorrichtung nach Anspruch 1, **dadurch gekennzeichnet, dass** der Leitungsstrang (4) zwischen der Vliesbahn (3) und einem mit der Vliesbahn (3) verbundenen Deckbahn (8) angeordnet ist.

4. Vorrichtung nach einem der Ansprüche 1 bis 3, **dadurch gekennzeichnet, dass** die Vlieslage ein wenigstens einschichtiges Vlies aufweist, das mit parallelen Reihen von mit gegenseitigem Abstand hintereinander angeordneten, reihenweise gegeneinander versetzten Trennschnitten versehen und quer zu den Trennschnittreihen zum Gitter (1) auseinandergezogen ist.

5. Vorrichtung nach Anspruch 4, **dadurch gekennzeichnet, dass** das zum Gitter (1) auseinandergezogene Vlies mit der anliegenden Vliesbahn (3) verbunden ist.

6. Vorrichtung nach Anspruch 4, **dadurch gekennzeichnet, dass** das Vlies die durchgehende Vliesbahn (3) bildet und beidseits dieser Vliesbahn (3) mithilfe der zur Vliesbahn (3) parallelen Trennschnittreihen zum Gitter (1) auseinandergezogen ist.

7. Vorrichtung nach einem der Ansprüche 4 bis 6, **dadurch gekennzeichnet, dass** das Vlies aus einer Vliesschicht (9) und wenigstens einer weiteren mit der Vliesschicht (9) verbundenen Schicht (10) aufgebaut ist.

8. Vorrichtung nach den Ansprüchen 6 und 7, **dadurch gekennzeichnet, dass** die beiden Schichten (9, 10) des Vlieses Bahnschichten (11, 12) bilden, die den Leitungsstrang (4) zwischen sich aufnehmen.

9. Vorrichtung nach Anspruch 7 oder 8, **dadurch gekennzeichnet, dass** die Schichten (9, 10) des Vlieses zwischen sich Zusatzstoffe und/oder Verstärkungseinlagen aufnehmen.

## Claims

1. Device for conducting water in a ground surface with a non-woven layer which is introduced into the ground (6) and has at least one line strand (4) for conducting water which is provided with passage openings (5), **characterised in that** the non-woven layer forms a grid (1) consisting of intersecting arrays of grid strands and comprises a non-woven web (3) extending along the line strand (4), and **in that** at least one array of the grid strands formed from non-woven strips (2) adjoins the non-woven web (3).

2. Device as claimed in claim 1, **characterised in that** the non-woven web (3) encases the line strand (4).

3. Device as claimed in claim 1, **characterised in that** the line strand (4) is arranged between the non-woven web (3) and a cover web (8) connected to the non-woven web (3).

4. Device as claimed in any one of claims 1 to 3, **characterised in that** the non-woven layer has an at least single-layer non-woven which is provided with parallel rows of separating cuts arranged one behind the other at a mutual spacing and offset in rows relative to one another and is drawn apart transversely to the rows of separating cuts to form the grid (1).

5. Device as claimed in claim 4, **characterised in that** the non-woven drawn apart to form the grid (1) is connected to the adjacent non-woven web (3).

6. Device as claimed in claim 4, **characterised in that** the non-woven forms the continuous non-woven web (3) and is drawn apart on both sides of this non-woven web (3) to form the grid (1) with the aid of the separating cut rows parallel to the non-woven web (3).

7. Device as claimed in any one of claims 4 to 6, **characterised in that** the non-woven is composed of a non-woven layer (9) and at least one further layer (10) connected to the non-woven layer (9).

8. Device as claimed in claims 6 and 7, **characterised in that** the two layers (9, 10) of the non-woven form web layers (11, 12) which receive the line strand (4) therebetween.

9. Device as claimed in claim 7 or 8, **characterised in that** the layers (9, 10) of the non-woven receive additives and/or reinforcing inserts therebetween.

## Revendications

1. Dispositif de conduite d'eau dans un espace au sol avec un voile non tissé inséré dans le sol (6) qui possède au moins une ligne de conduite (4) dotée d'ouvertures de passage (5) pour conduire l'eau, **caractérisé en ce que** le voile non tissé forme une grille (1) de groupes de barreaux de grille entrecroisés et contient une bande non tissée (3) courant le long de la ligne de conduite (4) et qu'au moins un groupe de barreaux de grille formé de rubans non tissés (2) est relié la bande non tissée (3).

2. Dispositif selon la revendication 1, **caractérisé en ce que** la bande non tissée (3) enveloppe la ligne de conduite (4).

3. Dispositif selon la revendication 1, **caractérisé en ce que** la ligne de conduite (4) est disposée entre la bande non tissée (3) et une bande de recouvrement (8) reliée à la bande non tissée (3).

4. Dispositif selon une des revendications 1 à 3, **caractérisé en ce que** le voile non tissé présente un matériau non tissé constitué d'au moins une couche qui est doté de rangées parallèles de coupes de séparation espacées les unes derrière les autres et décalées rangée par rangée les unes par rapport aux autres et qui est écarté de la grille (1) transversalement aux rangées de coupes de séparation.

5. Dispositif selon la revendication 4, **caractérisé en ce que** le matériau non tissé écarté de la grille (1) est relié à la bande non tissée (3).

6. Dispositif selon la revendication 4, **caractérisé en ce que** le matériau non tissé forme la bande non tissée (3) continue et est écarté de la grille (1) de part et d'autre de cette bande non tissée (3) à l'aide des rangées de coupes de séparation parallèles à la bande non tissée (3).

7. Dispositif selon une des revendications 4 à 6, **caractérisé en ce que** le matériau non tissé est constitué d'une couche non tissée (9) et d'au moins une autre couche (10) reliée à la couche non tissée (9).

8. Dispositif selon les revendications 6 et 7, **caractérisé en ce que** les deux couches (9, 10) du matériau non tissé forment des couches de bande (11, 12) qui reçoivent la ligne de conduite (4) entre elles.

9. Dispositif selon la revendication 7 ou 8, **caractérisé en ce que** les couches (9, 10) du matériau non tissé reçoivent entre elles des additifs et/ou des garnitures de renforcement.
